Europäisches Patentamt

European Patent Office

Office européen des brevets

(11) Publication number: **0 052 369**
**B1**

(12) **EUROPEAN PATENT SPECIFICATION**

(45) Date of publication of patent specification: **09.04.86**

(51) Int. Cl.⁴: **G 01 K 7/22**

(21) Application number: **81109718.7**

(22) Date of filing: **16.11.81**

(54) **Temperature detection device.**

(30) Priority: **19.11.80 JP 163646/80**
**19.11.80 JP 166623/80 u**

(43) Date of publication of application:
**26.05.82 Bulletin 82/21**

(45) Publication of the grant of the patent:
**09.04.86 Bulletin 86/15**

(84) Designated Contracting States:
**DE FR GB**

(56) References cited:
**DE-A-2 338 169**
**FR-A-2 204 803**
**FR-A-2 450 450**
**JP-A-53 043 319**
**US-A-3 748 624**

The file contains technical information
submitted after the application was filed and
not included in this specification

(73) Proprietor: **Matsushita Electric Industrial Co.,
Ltd.
1006, Oaza Kadoma
Kadoma-shi Osaka-fu, 571 (JP)**

(72) Inventor: **Ishikawa, Kazuo
20-22, Sakae-cho 1-chome
Chitose City Hokkaido, 066 (JP)**
Inventor: **Shibuya, Katsuji
936-71, Kamiosatsu
Chitose City Hokkaido, 066 (JP)**

(74) Representative: **Kirschner, Klaus Dieter et al
Patentanwälte Kirschner & Grosse Herzog-
Wilhelm-Strasse 17
D-8000 München 2 (DE)**

Courier Press, Leamington Spa, England.

## Description

The invention relates to temperature detection devices of the type set out in the preamble of claim 1.

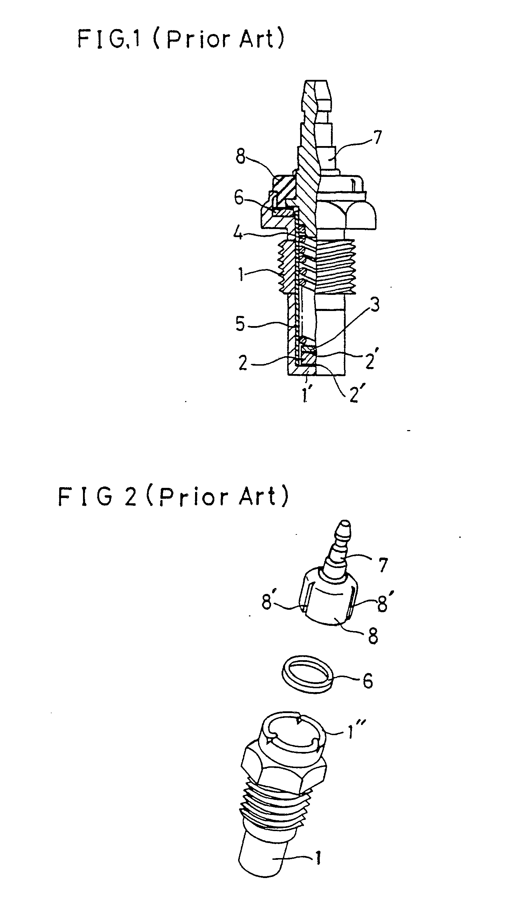

FIG. 1 is a partially sectional front view of a conventional temperature detection device for detecting a temperature of cooling water of an automobile engine. In FIG. 1, the temperature detection device comprises a metal casing 1 having an opening at an upper end thereof. A temperature detection element 2, for example, a temperature-dependent resistor, such as a thermistor, having electrodes 2', 2' on the upper and the lower face thereof, is disposed on an inner face of a casing bottom 1' in the casing 1 at space of a smaller inner diameter. A pressure spring 4 presses the temperature detection element 2 to the inner face of the casing bottom 1' through a terminal disk 3, which is disposed between the pressure spring 4 and the temperature detection element 2. An insulation liner 5 inserted in the metal casing 1 closely adhered to the inner face of the casing 1 for insulating inner elements, namely, the temperature detection element 2, the terminal disk 3 and the pressure spring 4 from the metal casing 1. A rubber packing 6 for attaining moisture-proof and gas-proof ability is disposed on the upper face of a shoulder shaped part at a connecting portion between a smaller inner diameter space in the casing 1 and larger inner diameter space in the casing 1. A terminal 7 for taking a detected signal is disposed at the upper open space of the casing 1 so as to make contact to the upper end part of the pressure spring 4. An insulation block 8 for holding the terminal 7 is disposed at the inner face of the casing 1 and the outer face of the terminal 7 inbetween and fixed by calking of an upper edge 1'' of the casing 1 to the upper end of slots 8' on the outer side of the insulation block 8.

Then the temperature detection element 2, the terminal disk 3, the pressure spring 4, the insulation liner 5, the gum packing 6 and the terminal 7 are assembled in the casing 1 in a predetermined manner such that the insulation block 8 between the upper part of the casing 1 and the terminal 7 is fixed by calking of the upper edge 1'' of the casing 1 resisting a pressure of the pressure spring 4.

In the above-mentioned conventional temperature detecting device, a temperature is detected by, for instance, immersing the outer bottom of the metal casing in a hot water, thereby conducting the temperature through the bottom 1' to the thermistor 2. But the problem has been that the terminal 7 is made from a solid brass rod by machine cutting. And in ordinary cases, the terminal 7 is molded in the insulation block 8, by means of insert molding. Therefore, because of such machine cutting from a brass rod and subsequent insert molding the manufacturing cost has been expensive. In the above-mentioned temperature detecting device, it has also been necessary that an anti-rotation-slippage torque between the insulation block 8 and the upper part of the metal casing 1 is kept above a predetermined threshold. For that purpose, in the conventional case, slots 8', 8' are formed at surrounding face of the insulation block 8 as shown in FIG. 2, and the upper edge 1'' of the metal casing 1 is calked at respective portions corresponding to the slots 8'.

Accordingly, for calking the upper edge 1'' of the metal casing 1 to the corresponding slot 8' of the insulation block 8, a positioning operation to the insulation block finding a right positioning angle is indispensable, and such positioning in the right angle can not be made by a robot insertion machine. Hence a temperature detection device of the coventional type is unsuitable for mass production.

A similar temperature detecting device is known from JP—A—5 343 319. This temperature detecting device shows a similar construction and also comprises a metal casing having an opening at an upper end thereof. The lower end of the casing has a space of smaller inner diameter than the opening at the upper end. A temperature detection element is disposed on the inner surface of the bottom of the casing together with a terminal disk. A pressure spring is disposed between this terminal disk and a solid terminal body at the upper end of the casing. Between the pressure spring and the casing there is arranged an insulating liner and an insulating block is fixed by calking of the upper edge of the casing whereby a packing ring is disposed between the casing and the insulating block.

A further temperature detecting device is disclosed in FR—A—2 450 450. This temperature detecting device includes also a metal casing at the inner surface of the bottom of which a temperature detection element is disposed. Further, this temperature detecting device comprises also a pressure spring within the casing and a terminal body at the upper end of the casing. An insulating ring body is mounted within a wider part of the casing and a packing ring is disposed between insulating ring body and the casing.

Finally, a temperature detecting device is described in the DE—A—23 38 169. This temperature detecting device has a rather long metal casing with a small inner diameter at the lower end and a wider inner diameter at the upper end. Within the wide aprt there is disposed an insulating block which is fixed by flanging of the upper end of the casing. Between the temperature detection element at the inner surface of the bottom of the casing and a pressure spring within the insulating block there is disposed an electric conductor and the upper end of the insulating block comprises a terminal of solid material is in contact with the pressure spring.

## Summary of the Invention

The present invention purposes to provide a temperature detection device comprising:

(a) a casing 9 of a metal substance and a circular cross-section having a cup shaped part

901 defining a first space and a further part 902 defining a second space of a larger inner diameter than the inner diameter of the first space and connected to said first space, said further part being wider than said cup shaped part,

(b) a temperature detection element 10 disposed on the inner surface of the bottom 904 of said cup shaped part 901 of said casing 9,

(c) a terminal body 15 having a top part 151 of smaller diameter than said further part 902 for serving as terminal and a base portion for mounting the terminal body 15 to the casing 9,

(d) an insulating ring body 16 having a through hole and being mounted between the base portion of the terminal body and the wider part 902 of the casing 9, and

(e) a packing ring 14 disposed between the bottom of said wider part 902 and the bottom edge of said base portion.

According to the invention the temperature detecting device is characterized in that (a1) the upper edge of said further part 902 is formed in a truncated cone shaped calking edge part 903, that (c1) the terminal body is a drawn terminal body 15 wherein the top part 151 is hollow and the base portion is in the form of a hollow truncated cone shaped skirt part 152 connected to said hollow top part 151, said drawn terminal body having a continuous hollow space inside the hollow top part 151 and the skirt part 152, and that (d1) said insulating ring body 16 is disposed on the skirt part 152 of said terminal body 15, the upper peripheral face of said insulating ring body 16 behing held by said truncated cone shaped calking edge part 903.

A temperature detection device of the present invention has the above-mentioned structure, therefore a material loss could be saved largely and the device could be obtainable at a very low cost.

Furthermore, according to the present invention, angle of the upper face of the insulation ring cap at the part pressed by the calking edge against axis of the terminal cap, namely the angle, which is substantially the angle of the outer face of the calking edge part against the axis of the enclosure, is selected in a range of 10° to 60°.

In the above-mentioned structure, a positioning operation considering the angular position and a relative spatial position between the insulation ring cap and the calking edge of the enclosure is dispensable, thereby allowing a use of automatic component insertion robot and a sufficient anti-rotation-slip torque between the insulation ring cap and the calking edge of the enclosure is obtainable. Accordingly, a temperature detection device of the present invention is suitable for mass production.

Brief explanation of the drawing

FIG. 1 is a fragmental front view of a temperature detection device of conventional type.

FIG. 2 is an exploded perspective view of a temperature detection device of FIG. 1.

FIG. 3 is a sectional front view of a temperature detection device of the present invention.

FIG. 4 is a graph of a performance curve of anti-rotation-slip torque of an insulation ring cap with respect to a calking angle of the calking edge of the enclosure.

Description of the preferred embodiment

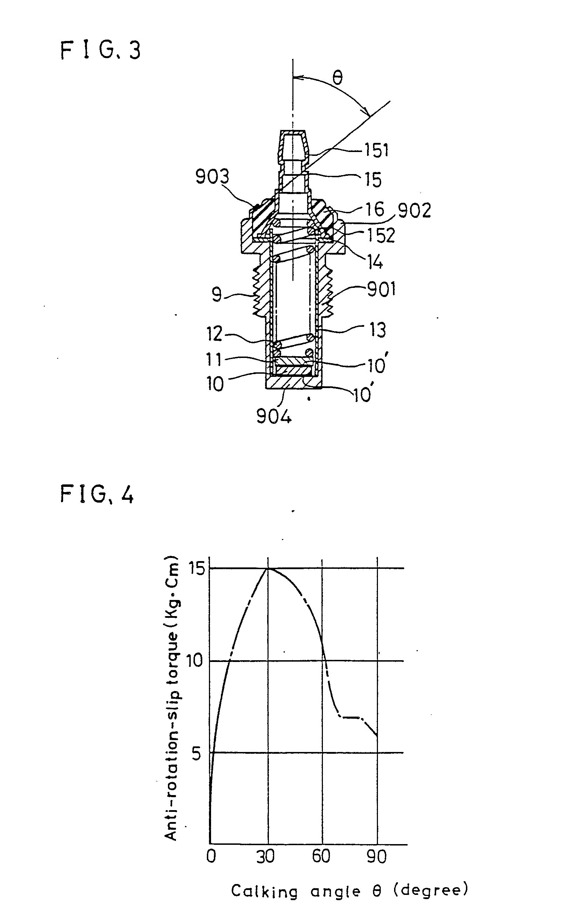

As shown in FIG. 3, a metal casing 9 as the enclosure has a slender cup-shaped part 901 defining a slender first space of a smaller inner diameter and a larger depth and a shallow and wider part 902 defining a shallow and wider second space of a larger inner diameter smaller depth and connected to the first space, the upper edge part 903 of the wider part 902 being formed in cone shaped calking edge. A temperature detection element 10 of a temperature-dependent resistor, such as a thermistor, having electrodes 10', 10' on the upper and the lower face thereof is disposed on an inner face of a casing bottom 904 in the slender cup shaped part 901 of the casing 9. A pressure spring 12 presses the temperature detection element 10 to the inner face of the casing bottom 904 through a terminal disk 11 disposed between the pressure spring 12 and the temperature detection element 10. An insulation liner 134 inserted in the metal casing 9 is closely adhered to inner face of the casing 9 for insulating inner elements, namely, the temperature detection element 10, the terminal disk 11 and the pressure spring 12 from the metal casing 9. A rubber packing 14 for moisture-proof is disposed on the upper face of a shoulder shaped part at a connecting portion between the slender cup-shaped part 901 of the casing 9 and the larger inner diameter part 902 of the casing 9. A drawn terminal cap 15 for taking a detected signal is disposed at the upper open end of the casing 9. The terminal cap is made of a metal sheet by a drawing process. The drawn terminal cap 15 has a slender top part 151 of smaller diameter for serving as a terminal and a cone shaped skirt part 151 connected to the slender top part 151. And further the drawn terminal cap 15 has a continuous hollow space inside the slender top part 151 and the skirt part 152. The inner face of the skirt part 152 holds the upper end of the spring 12 and gives pressing force to the spring. The upper end of the insulation liner 13 comes in contact to the inner face of the skirt part 152. An insulation ring cap 16 having a through hole is disposed on the skirt part 152 of the drawn terminal cap 15 in order to fix the drawn terminal cap 15. In this embodiment, the insulation ring cap 16 is made of heat-resistive phenol resin, but any other insulating substance having a sufficient mechanical strength can be used.

The insulation ring cap is fixed by calking with the calking edge part 903 of the metal casing 9 resisting an upward pressure of the pressure spring 12, so that the temperature detection element 10, the terminal disk 11, the compression spring 12, the insulation liner 13 are fixed in the space of the slender part 901 by sealing the space by means of the drawn terminal cap 15, thereby assuring good thermal and electric contact of the temperature detection element to the metal casing 9. The primary remarkable advantage of the present invention is that the material loss and manufacturing time can be saved largely and the device could be obtainable at a very low cost by using the drawn terminal cap instead of the conventional solid terminal made from a brass rod worked by machine cutting processing. A drawing processing can provide a smooth surface of a product, and therefore a good insertion contact between the drawn terminal cap and the corresponding socket thereof is obtainable. Furthermore, since the drawing work is used to make the terminal cap, a viscous, abrasion resistive and smooth material can be selected for the work material, so that few metal trash exists and therefore a good insulation is obtainable. For example, a conventional terminal has been made of brass rod of a material of JIS—C—3601 BD brass which is liable to produce fine metal trash powder when worked and used. And on the contrary, a drawn terminal cap of the present invention is made of more viscous, abrasion resistive and smooth material of JIS-—C—2680R—O brass, which makes substantially no power trash when worked and used. As the top end of the space to contain the spring 12 reaches inside space of the cone shaped skirt part 152 of the terminal cap 15 and the upper end of the pressure spring 12 is stopped by the inner face of the skirt part 152, the upper end of the insulation liner 15 is extended into the space of the cone shaped skirt part 152 of the drawn terminal cap 15 exceeding the upper end of the inner face of the cylindrical slender part 901, and accordingly a reliable insulation is secured even if the length of the insulation liner is slightly shorter than designed length as a result of scatter of size since the liner is longer than a necessary length. Since the drawn terminal cap 15 and the insulation ring cap 16 are made as separate components instead of integreal construction by expensive and time taking insert molding processing, further cost saving in manufacturing can be realized.

As a special feature, the angle of the upper face of the insulation ring cap 16 at the part pressed by calking edge part 903 against axis of the terminal cap 15, namely the angle θ, which is substantially the angle of the outer face of the calking edge part against the axis of the enclosure, is selected in a range of 10° to 60°. The inventors made many samples of temperature detecting devices changing the calking angle θ within the range of 0° to 90°, and measured the anti-rotation-slippage torque between the drawn terminal and the casing. The measuring result is shown in FIG. 4.

As shown in FIG. 4, the anti-rotation-slippage torque takes a peak value of 15 kg· cm at the calking angle θ is 30°. And the anti-rotation-slippage torque takes smaller value at both the wider or narrower calking angle. θ. Generally, a required anti-rotation-slippage torque for such temperature detection device, for example, for use a cooling water temperature detection unit of an automobile engine, is requested to be more than 10 kg·cm. Therefore, it is recognised from FIG. 4 that the suitable calking angle θ for that required anti-rotation-slippage torque is within 10° to 60°.

## Claims

1. A temperature detection device comprising:

(a) a casing (9) of a metal substance and a circular cross-section having a cup shaped part (901) defining a first space and a further part (902) defining a second space of a larger inner diameter than the inner diameter of the first space and connected to said first space, said further part being wider than said cup shaped part,

(b) a temperature detection element (10) disposed on the inner surface of the bottom (904) of said cup shaped part (901) of said casing (9),

(c) a terminal body (15) having a top part (151) of smaller diameter than said further part (902) for serving as terminal and a base portion for mounting the terminal body (15) to the casing (9),

(d) an insulating ring body (16) having a through hole and being mounted between the base portion of the terminal body and the wider part (902) of the casing (9), and

(e) a packing ring (14) disposed between the bottom of said wider part (902) and the bottom edge of said base portion,

characterized in that (a1) the upper edge of said further part (902) is formed in a truncated cone shaped calking edge part (903), that (c1) the terminal body is a drawn terminal body (15) wherein the top part (151) is hollow and the base portion is in the form of a hollow truncated cone shaped skirt part (152) connected to said hollow top part (151), said drawn terminal body having a continuous hollow space inside the hollow top part (151) and the skirt part (152), and that (d1) said insulating ring body (16) is disposed on the skirt part (152) of said drawn terminal body (15), the upper peripheral face of said insulating ring body (16) being held by said truncated cone shaped calking edge part (903).

2. A temperature detection device according to claim 1, having an insulating liner inserted in the casing, characterized in that the top end of said insulating liner (13) reaches to contact the inner face of the cone shaped skirt part (152) of the drawn terminal body (15).

3. A temperature detection device according to claim 1, characterized in that the angle of the upper face of said insulation ring body (16) and the part pressed by the calking edge part (903) with respect to the axis of the terminal body (15), namely the angle which is substantially the angle of the outer face of the calking edge part (903) with respect to the axis of the casing (9), is selected in a range of 10° to 60°.

## Patenansprüche

1. Temperaturfühlvorrichtung umfassend:

(a) ein Gehäuse (9) aus einer metallischen Substanz und mit einem kreisförmigen Querschnitt, das einen becherförmigen Teil (901), de einen ersten Raum definiert, und einen weiteren Teil (902) aufweist, der einen zweiten Raum mit einem größeren Innendurchmesser als der Innendurchmesser des ersten Raumes definiert und mit dem ersten Raum in Verbindung steht, wobei der weitere Teil weiter als der genannte becherförmige Teil ausgebildet ist,

(b) ein Temperaturfülelement (10), das an der Innenfläche des Bodens (904) des genannten becherförmigen Teiles (901) des genannten Gehäuses (9) angeordnet ist,

(c) einen Anschlußkörper (15), der ein Oberteil (151) mit kleinerem Durchmesser als der gennante weitere Teil (902), um als Anschluß zu dienen, und einen Fußabschnitt hat, um den Anschlußkörper (15) an dem Gehäuse (9) zu montieren,

(d) einen isolierenden Ringkörper (16), der eine durchgehende Öffnung hat und zwischen dem Fußabschnitt des Anschlußkörpers und dem weiteren Teil (902) des Gehäuses (9) montiert ist, und

(e) einen Dichtring (14), der zwischen der Unterseite des genannten weiteren Teiles (902) und der unteren Kante des genannten Fußabschnittes angeordnet ist, dadurch gekennzeichnet, daß

(a1) die obere Kante des genannten weiteren Teils (902) zu einem kegelstumpfförmigen Stemmkantenteil (903) ausgebildet ist, daß

(c1) der Anschlußkörper ein tiefgezogener Anschlußkörper (15) ist, bei dem das Oberteil (151) hohl ist und der Fußabschnitt in Form eines hohlen, kegelstumpfförmigen Schürzenteils (152) ausgebildet ist, der mit dem genannten hohlen Oberteil (151) verbunden ist, wobei der tiefgezogene Anschlußkörper einen durchgehenden, hohlen Innenraum in dem hohlen Oberteil (151) und dem Schürzenteil (152) aufweist, und daß

(d1) der genannte isolierende Ringkörper (16) auf dem Schürzenteil (152) des tiefgezogenen Anschlußkörpers (15) angeordnet ist, wobei obere Umfangsfläche des genannten isolierenden Ringkörpers (16) von gem genannten kegelstumpfförmigen Stemmkantenteil (903) gehalten ist.

2. Temperaturfühlvorrichtung nach Anspruch 1, mit einer isolierenden Auskleidung in dem Gehäuse, dadurch gekennzeichnet, daß das obere Ende der genannten isolierenden Auskleidung (13) bis zu dem Kontakt mit der Innenfläche des konusförmigen Schürzenteils (152) des tiefgezogenen Anschlußkörpers (15) reicht.

3. Temperaturfühlvorrichtung nach Anspruch 1, dadurch gekennzeichnet, daß der Winkel der oberen Fläche des isolierenden Ringkörpers (16) und dem von dem Stemmkantenteil (903) verpressten Teil gegenüber der Achse des Anschlußkörpers (15), d.h. der Winkel, der im wesentlichen der Winkel zwischen der Außenfläche des Stemmkantenteils (903) gegenüber der Achse des Gehäuses (9) ist, im Bereich von 10° bis 60° gewählt ist.

**Revendications**

1. Capteur de température comprenant:

(a) un boîtier (9) en substance métallique ayant une section circulaire comportant une partie en forme de coupe (901) définissant un premier espace et une autre partie (902) définissant un second espace d'un diamètre intérieur supérieur au diamètre intérieur du premier espace et relié à ce premier espace, cette autre partie étant plus large que la partie en forme de coupe,

(b) un élément (10) de détection de la température disposé sur la surface intérieure du fond (904) de la partie en forme de coupe (901) du boîtier (9).

(c) un corps de raccordement (15) ayant une partie supérieure (151) de diamètre inférieur à l'autre partie (902) pour servir de borne et une partie de base pour le montage du corps de raccordement )15) sur le boîtier (9),

(d) un corps isolant en forme d'anneau (16) ayant un trou traversant et monte' entre la partie de base du corps de raccordement et la partie plus large (902) du boîtier (9), et

(e) une bague de graniture (14) disposée entre le fond de la partie plus large (902) et le bord inférieur de la partie de base, caractérisé ence que:

(a1) le bord supérieur de l'autre partie (902) est formé dans une partie de bord de matage (903) en forme de tronc de cône,

(c1) le corps de raccordement comporte un corps de raccordement étiré (15), où la partie superieure (151) est creuse et la partie de base à la forme d'une partie à jupe (152) en forme de tronc de cône creux qui est relié à la partie supérieure creuse (151), le corps de raccordement étiré présentant un espace creux continu à l'intérieur de la partie supérieure creuse (151) et de la partie à jupe (152), et (d1) le corps isolant en anneau (16) est disposé sur la partie à jupe (152) du corps de raccordement étiré (15), la face périphérique supérieure du corps isolant en anneau (16) étant maintenue par la partie à bord de matage (903) en forme de tronc de cône.

2. Capteur selon la revendication 1, comportant une chemise isolante insérée dan le boîtier, caractérisé en ce que l'extrémité supérieure de la chemise isolant (13) vient en contact avec la face intérieure de la partie à jupe (152) en forme de cône du corps de raccordement étiré (15).

3. Capteur de température selon la revendication 1, caractérisé en ce que l'angle de la face supérieure du corps isolant en forme d'anneau (16) et la partie comprimée par la partie de bord de matage (903) par rapport à l'axe du corps de raccordement (15), c'est-à-dire l'angle qui est sensiblement l'angle de la face extérieure de la partie de bord de matage (903) par rapport à l'axe du boîtier (9), est choisi dans la plage allant de 10° à 60°.

FIG.1 (Prior Art)

FIG 2 (Prior Art)

1

FIG. 3

FIG. 4